# EUROPÄISCHE PATENTANMELDUNG

(11) **EP 2 886 779 A1**
(43) Veröffentlichungstag der Anmeldung: **24.06.2015**
(21) Anmeldenummer: 14199459.0
(22) Anmeldetag: 19.12.2014
(51) Int. Cl.: E06B 3/96, E06B 3/30

(54) **Kunststofffenster- oder türrahmen und Verfahren zur Herstellung eines Kunststofffenster- oder türrahmens**

(30) Priorität: 20.12.2013 DE 102013114710
(71) Anmelder: SCHÜCO International KG, 33609 Bielefeld (DE)
(72) Erfinder: Angermaier, Marko, 06179 Teutschenthal (DE)
(74) Vertreter: Kleine, Hubertus

(57) **Zusammenfassung**

Ein Kunststofffenster- oder türrahmen (1) weist mehrere zu einem Rahmen miteinander verschweißte Kunststoffrahmenprofilteile (2) sowie mit den Kunststoffrahmenprofilteilen (2) verbindbare Deckschalen (3) auf, wobei zumindest im Bereich miteinander verschweißter Kunststoffrahmenprofilteile (2) ein zwischen einem jeweiligen Kunststoffrahmenprofilteil (2) und der mit diesem verbundenen Deckschale (3) vorgesehener Hohlraum (5) zumindest teilweise mit einer Schweißwulst (23) aus Kunststoffrahmenprofilteilmaterial vorgesehen ist. Desweiteren wird ein Verfahren zur Herstellung eines solchen Kunststofffenster-oder türrahmens (1) beschrieben.

## Beschreibung

Die vorliegende Erfindung betrifft einen Kunststofffenster- oder türrahmen gemäß dem Oberbegriff des Anspruchs 1 sowie ein Verfahren zu dessen Herstellung.

Solche aus einem thermoplastischen Kunststoff, wie beispielsweise Hart-PVC bestehende Fenster- oder Türflügelrahmen bestehen üblicherweise aus mehreren zu einem Rahmen miteinander verschweißte Kunststoffrahmenprofilteilen, die zur Fertigung des Fenster- oder Türflügelrahmens an ihren Außenenden auf Gehrung geschnitten und anschließend miteinander in einer Schweißmaschine verschweißt werden, wobei beim Verschweißen die auf Gehrung geschnittenen Ränder plastifiziert und gestaucht werden.

Das bei der Stauchung quer zur Schweißlinie zwischen den beiden Kunststoffrahmenprofilteilen weggedrückte Material, auch als Schweißnaht oder Schweißwulst bezeichnet, muss anschließend weggeschnitten werden.

Die hier gattungsgemäßen Kunststofffenster- oder Türflügelrahmen sind des Weiteren mit wenigstens an einer Seite vorgesehenen Deckschalen versehen, die auf einer Seite der Kunststoffrahmenprofilteile befestigt werden.

Bei der Herstellung solcher Kunststofffenster- oder Türflügelrahmen werden, wie oben beschrieben, zunächst die Kunststoffrahmenprofilteile auf Gehrung geschnitten und anschließend miteinander verschweißt und im Anschluss daran die Deckschalen zum Aufbringen auf jedes der Kunststoffrahmenprofilteile zugeschnitten und aufwändig in Einzelarbeit auf das Kunststoffrahmenprofilteil aufgebracht, wodurch insbesondere ein gewünschter kontinuierlicher Fertigungsablauf zur Herstellung solcher Kunststofffenster- oder türrahmen, beispielsweise in einer Fließstrecke, nicht möglich ist.

Nachteilig ist außerdem, dass durch Fertigungstoleranzen beispielsweise Spalten im Gehrungsbereich der Deckschalen auftreten können und/oder diese nur unzureichend an den jeweiligen Kunststoffrahmenprofilteilen fixiert sind, so dass es dadurch zu Klappergeräuschen kommen kann.

Aufgabe der vorliegenden Erfindung ist es, einen Kunststofffenster- oder türrahmen bereitzustellen, mit dem die oben genannten Nachteile beseitigt sind. Eine weitere Aufgabe der Erfindung besteht darin, ein vereinfachtes Verfahren zur Herstellung solcher Kunststofffenster- oder türrahmen bereitzustellen.

Die erste Aufgabe wird durch einen Kunststofffenster- oder türrahmen mit den Merkmalen des Anspruchs 1 gelöst.

Die zweite Aufgabe wird durch ein Verfahren zur Herstellung eines solchen Kunststofffenster- oder türrahmens mit den Merkmalen des Anspruchs 8 gelöst.

Bei dem erfindungsgemäßen Kunststofffenster- oder türrahmen ist zumindest im Bereich miteinander verschweißter Kunststoffrahmenprofilteile ein zwischen einem jeweiligen Kunststoffrahmenprofilteil und der mit diesem verbundenen Deckschale vorgesehene Hohlraum zumindest teilweise mit einer die Deckschale abstützenden Schweißwulst aus Kunststoffrahmenprofilteilmaterial vorgesehen.

Diese Schweißwulst, die beim Verschweißen der bereits mit den Deckschalen verbundenen Kunststoffrahmenprofilteile miteinander entsteht, stabilisiert bei den erfindungsgemäßen Kunststofffenster- oder türrahmen den verschweißten Bereich der Rahmen und verhindert zusätzlich ein Klappern der Deckschalen auf den Kunststoffrahmenprofilteilen.

Im Gegensatz zu den aus dem Stand der Technik bekannten Kunststofffenster- oder türrahmen, bei denen die Schweißwulst in einem separaten Arbeitsschritt auf der der Deckschale zugewandten Oberseite der Kunststoffrahmenprofilteile entfernt wird, muss die Schweißwulst bei den erfindungsgemäßen Kunststofffenster- oder türrahmen nicht nur nicht entfernt werden, sondern erfüllt einen zusätzlichen technischen Zweck.

Dadurch ist außerdem eine aus dem Stand der Technik zur Vermeidung von Klappergeräuschen bekannte Befestigung der Deckschalen auf den Kunststoffrahmenprofilteilen unter Vorspannung nicht erforderlich.

Das erfindungsgemäße Verfahren zur Herstellung solcher Kunststofffenster- oder türrahmen zeichnet sich dadurch aus, dass nach dem Zuschneiden der Kunststoffrahmenprofile und der Deckschalen auf Gehrung die Deckschalen so zugeschnitten werden, dass die Länge der jeweiligen Deckschalen um ein vordefiniertes Abbrandmaß geringer ist als die Länge des jeweiligen Kunststoffrahmenprofils, dann die Kunststoffrahmenprofile mit den Deckschalen verbunden werden und erst anschließend ein Verschweißen der Kunststoffrahmenprofil-Deckschalen-Verbünde zu einem Rahmen erfolgt.

Dadurch, dass die Deckschalen beim Verschweißen der Kunststoffrahmenprofile bereits auf die Kunststoffrahmenprofile aufgesetzt sind, kann sich der beim Schweißen aufgeweichte Bereich der Kunststoffrahmenprofile geführt zwischen das Kunststoffrahmenprofil und die jeweilige Deckschale pressen, was zu einer zusätzlichen Stabilisierung der Deckschalen an dem Kunststoffrahmenprofil führt und so beispielsweise ein Klappern der Deckschalen auf den Kunststoffrahmenprofilen wirksam verhindert ist.

Vorteilhafte Ausführungsvarianten der Erfindung sind Gegenstand der Unteransprüche.

Gemäß einer vorteilhaften Ausführungsvariante des erfindungsgemäßen Kunststofffenster- oder türrahmens ist auf einer dem Kunststoffrahmenprofilteil zugewandten Unterseite der Deckschalen mindestens ein auf der der Deckschale zugewandten Oberseite des Kunststoffrahmenprofilteils aufliegender Stützsteg vorgesehen.

Dadurch ist ein vordefinierter Abstand zwischen der Unterseite der Deckschale und der Oberseite des Kunststoffrahmenprofilteils festgelegt, in den sich beim Verschweißen der Kunststoffrahmenprofilteile die Schweißwulst hineinpressen lässt.

Nach einer weiteren Ausführungsvariante der Erfindung umgreifen die Deckschalen die Kunststoffrahmenprofilteile formschlüssig. Ein formschlüssiges Umgreifen der Deckschalen um die Kunststoffrahmenprofilteile ist hier in einem Maß ermöglicht, bei dem ein Aufklipsen der Deckschalen im Anschluss an ein Verschweißen, wie es im Stand der Technik vorgenommen wird, nicht mehr möglich ist.

Da die Deckschalen erfindungsgemäß vor dem Verschweißen auf die Kunststoffrahmenprofilteile aufgesetzt werden, können die Deckschalen beispielsweise auch von einer Seite auf die Kunststoffrahmenprofilteile aufgeschoben werden.

Nach einer weiteren vorteilhaften Ausführungsvariante der Erfindung sind die Deckschalen aus Metall insbesondere Aluminium gefertigt. Denkbar sind aber auch Deckschalen aus Kunststoff oder Holz, wobei insbesondere aus Kunststoff bestehende Deckschalen vorzugsweise mit einer Folierung zur Optimierung der Wetterbeständigkeit und/oder einer variablen Gestaltung des Oberflächendesigns der Deckschalen versehen sind.

Gemäß einer vorteilhaften Ausführungsvariante des erfindungsgemäßen Verfahrens werden beim Verschweißen der Kunststoffrahmenprofil-Deckschale-Verbünde zu einem Rahmen zunächst die einander zugewandten Randbereiche der Kunststoffrahmenprofilteile erhitzt und anschließend die Kunststoffrahmenprofilteile aneinander gepresst, bis die Deckschalen einander berühren.

Dadurch ist eine exakte Anpassung der Kunststoffrahmenprofilteile und der Deckschalen auch im Gehrungsbereich ermöglicht, da die Gehrung der Deckschalen sehr exakt zugeschnitten werden kann und beim Schweißen die Kunststoffrahmenprofilteile solange erhitzt und aneinander gepresst werden, bis die Deckschalen einander berühren und somit die Gehrungsbereiche der Deckschalen exakt aneinander liegen.

Nachfolgend wird ein Ausführungsbeispiel der Erfindung anhand der beiliegenden Zeichnungen näher erläutert. Es zeigen:
- Figur 1: einen perspektivischen Ausschnitt einer Ausführungsvariante eines erfindungsgemäßen Fenster- oder türrahmens mit teilweise weggeschnittener Deckschale im Gehrungsbereich aneinander liegender Deckschalen,
- Figur 2: eine perspektivische Ansicht des in Figur 1 gezeigten Ausschnitts des Fenster- oder türrahmens ohne ausgeschnittener Deckschale,
- Figur 3: eine perspektivische Ansicht eines Eckbereiches des Fenster- oder türrahmens aus Figur 1 vor dem Zusammenfügen zweier Kunststoffrahmenprofilteile und Deckschalen mit Schweißwulst zwischen den beiden Kunststoffrahmenprofilteilen und
- Figur 4: eine weitere perspektivische Ansicht des Ausschnitts des Fenster- oder türrahmens aus Figur 1 vor dem Zusammenfügen der Kunststoffrahmenprofilteil-Deckschalen-Verbünde.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Kunststofffenster- oder türrahmen, Deckschale, Schweißwulst, Stützsteg und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

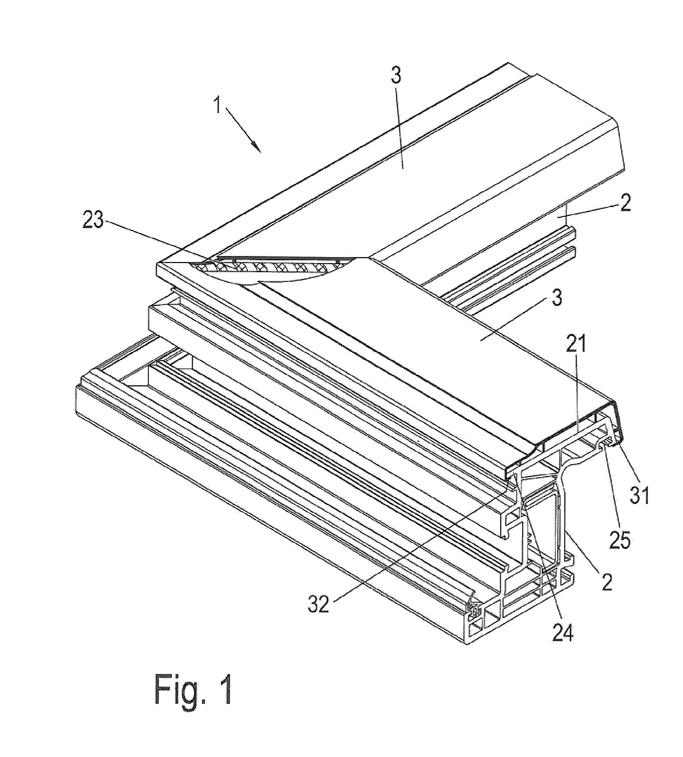

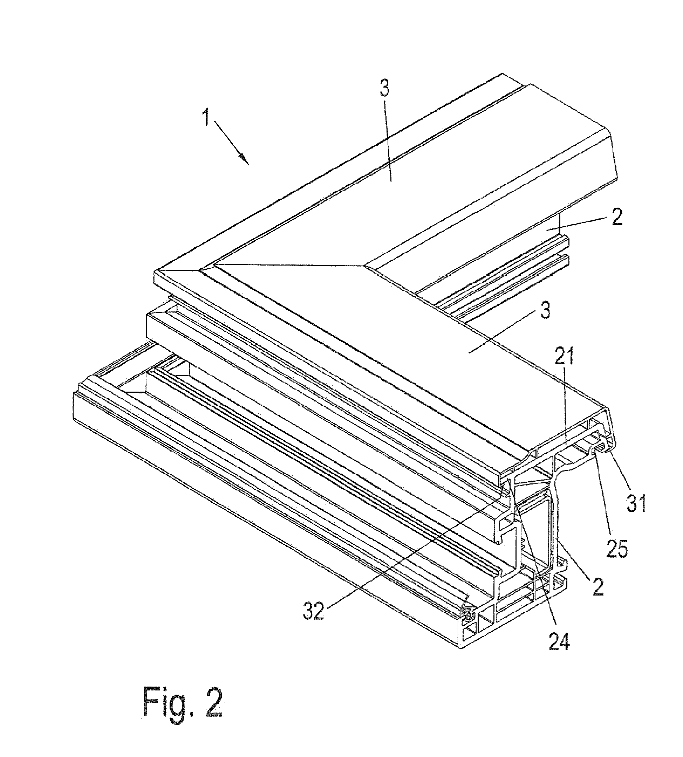

In den Figuren 1 und 2 ist mit dem Bezugszeichen 1 insgesamt ein Eckbereichsausschnitt eines erfindungsgemäßen Kunststofffenster- oder türrahmens bezeichnet. Der Kunststofffenster- oder türrahmen 1 weist dabei im Wesentlichen mehrere zu einem Rahmen miteinander verschweißte Kunststoffrahmenprofilteile 2 auf sowie mit den jeweiligen Kunststoffrahmenprofilteilen 2 verbundene Deckschalen 3, die insbesondere die einem Außenbereich zugewandte Außenseite der Kunststoffrahmenprofilteile 2 abdecken.

Die Deckschalen 3 sind in der hier gezeigten Ausführungsvariante so geformt, dass sie quer zu ihrer Längserstreckung so geformt sind, dass sie einen oberen Steg 21 des Kunststoffrahmenprofilteils 2 formschlüssig mithilfe jeweiliger den Steg 21 umgreifenden Schalenteilen 31, 32 umgreifen.

Denkbar sind aber auch andere Fixierungsmöglichkeiten wie beispielsweise Verschrauben, Verkleben, Verrasten oder dergleichen.

An einer den Kunststoffrahmenprofilteil 2 zugewandten Unterseite 33 der Deckschale ist dabei mindestens ein auf der der Deckschale 3 zugewandten Oberseite des oberen Stegs 21 des Kunststoffrahmenprofilteils 2 aufliegender Stützsteg 34 vorgesehen. In der in den Figuren 1 bis 4 gezeigten Ausführungsvariante sind insgesamt vier solcher Stützstege 34 vorgesehen.

Der zwischen der Unterseite 33 der Deckschale 3 und dem Kunststoffrahmenprofilteil 2 vorgesehene Hohlraum 5 ist dabei im Bereich der miteinander verschweißten Kunststoffrahmenprofilteile 2 zumindest teilweise mit einer Schweißwulst 23, bestehend aus Kunststoffrahmenprofilteilmaterial, das beim Aneinanderdrücken der Kunststoffrahmenprofilteile 2 nach dem Erhitzen der Randbereiche der Kunststoffrahmenprofilteile 2 plastifiziert und in zumindest teilweise in den Hohlraum 5 hineingedrückt wurde, wie in Figur 1 zu erkennen ist, ausgefüllt.

Die Deckschalen 3 können dabei bevorzugt aus Metall, insbesondere aus Aluminium gefertigt sein. Denkbar sind aber auch Deckschalen 3 aus anderen Materialien wie beispielsweise Holz oder Kunststoff. Insbesondere bei aus Kunststoff gefertigten Deckschalen 3 ist es bevorzugt vorgesehen, diese zumindest auf ihrer für den Betrachter sichtbare Sichtseite mit einer Folierung versehen, zur Optimierung der Wetterbeständigkeit und/oder einer variablen Gestaltung des Oberflächendesigns der Deckschalen.

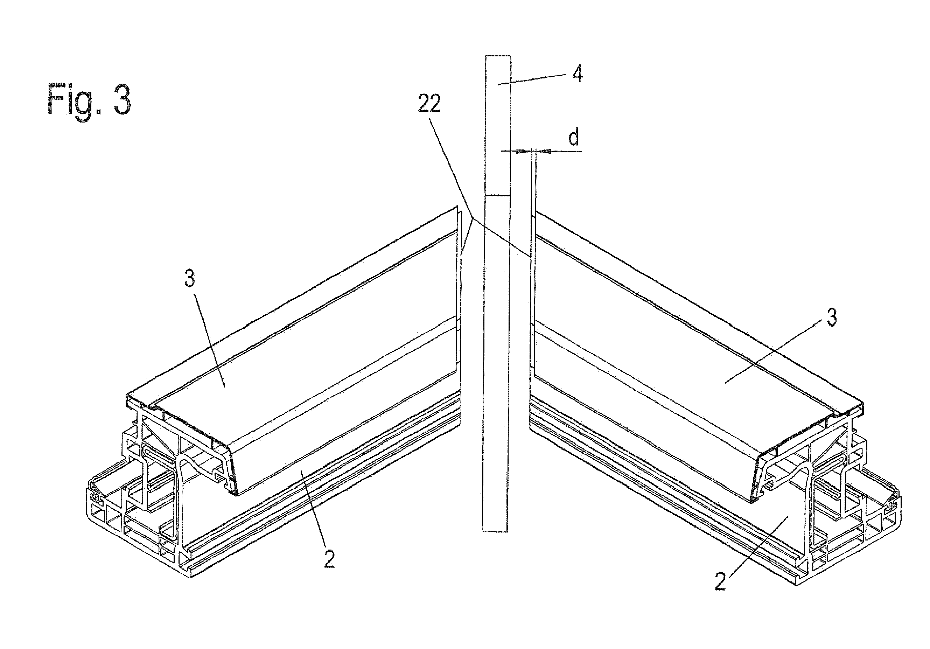

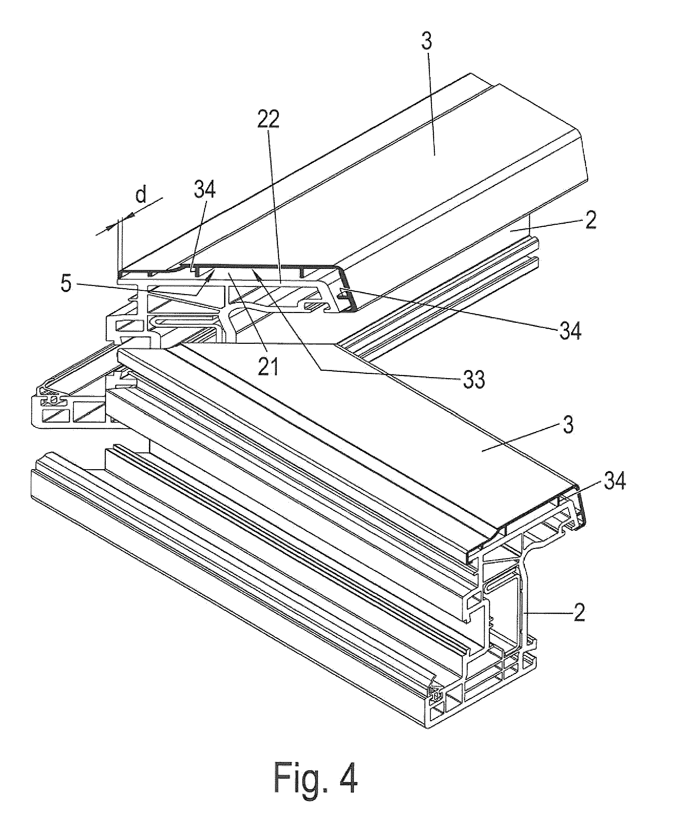

In den Figuren 3 und 4 sind miteinander zu verschweißende Kunststoffrahmenprofilteile mit bereits auf diese aufgesetzte Deckschalen vor dem Zusammenschweißen der Kunststoffrahmenprofilteile gezeigt. Wie insbesondere in Figur 3 gut erkennbar ist, sind die Rahmenteile 3 um ein vordefiniertes Abbrandmaß d kürzer geschnitten als die jeweiligen Kunststoffrahmenprofilteile 2. Dieses Abbrandmaß d definiert dabei den Aufschmelzbereich des Kunststoffrahmenprofilteils.

Die Aufschmelzung erfolgt dabei vorzugsweise auf einer konventionellen Schweißmaschine mit einem hier schematisch dargestellten Schweißspiegel 4, so dass zur Herstellung eines solchen Kunststofffenster- oder türrahmens 1 zunächst die zum Kunststofffenster- oder türrahmen 1 zusammenzusetzenden Kunststoffrahmenprofilteile 2 sowie die Deckschalen 3 auf Gehrung geschnitten werden, wobei die Länge der jeweiligen Deckschalen 3, wie oben bereits beschrieben, um das vordefinierte Abbrandmaß d geringer ist als die jeweiligen Kunststoffrahmenprofilteils.

Danach werden zunächst die Deckschalen 3 mit den jeweiligen Kunststoffrahmenprofilteilen 2 verbunden und erst anschließend die jeweiligen Kunststoffrahmenprofilteile-Deckschale-Verbünde in der Schweißmaschine zu einem Rahmen verschweißt.

Beim Verschweißen der Kunststoffrahmenprofilteile 2 werden, wie in Figur 3 angedeutet, zunächst die einander zugewandten Randbereiche 22 der Kunststoffrahmenprofilteile 2 erhitzt. Anschließend wird der Schweißspiegel entfernt und die Kunststoffrahmenprofilteile so aneinander gepresst, bis die an diesen befestigten Deckschalen 3 im Gehrungsschnitt einander berühren.

Bei der Definition des Abbrandmaßes d ist berücksichtigt, dass während des Erhitzens genügend Kunststoffrahmenprofilteilmaterial für die Schweißwulst zur Abstützung der Deckschale 3 entsteht.

Die Entstehung von Spalten im Gehrungsbereich der Deckschalen 3 wird dadurch zuverlässig vermieden.

### Bezugszeichenliste

- 1: Kunststofffenster- oder türrahmen
- 2: Kunststoffrahmenprofilteile
- 21: Steg

- 23: Schweißwulst
- 3: Deckschalen
- 31: Schalenteil
- 32: Schalenteil
- 33: Unterseite
- 34: Stützsteg
- 4: Schweißspiegel
- 5: Hohlraum

- d: Abbrandmaß

## Patentansprüche

1. Kunststofffenster- oder türrahmen (1), aufweisend
- mehrere zu einem Rahmen miteinander verschweißte Kunststoffrahmenprofilteile (2),
- mit den Kunststoffrahmenprofilteilen (2) verbindbare Deckschalen (3),
**dadurch gekennzeichnet, dass**
- zumindest im Bereich miteinander verschweißter Kunststoffrahmenprofilteile (2) ein zwischen einem jeweiligen Kunststoffrahmenprofilteil (2) und der mit diesem verbundenen Deckschale (3) vorgesehener Hohlraum (5) zumindest teilweise mit einer die Deckschale (3) abstützenden Schweißwulst (23) aus Kunststoffrahmenprofilteilmaterial vorgesehen ist.

2. Kunststofffenster- oder türrahmen (1) nach Anspruch 1, **dadurch gekennzeichnet, dass** auf einer dem Kunststoffrahmenprofilteil (2) zugewandten Unterseite (33) der Deckschale (3) mindestens ein auf der der Deckschale (3) zugewandten Oberseite (21) des Kunststoffrahmenprofilteil (2) aufliegender Stützsteg (34) vorgesehen ist.

3. Kunststofffenster- oder türrahmen (1) nach Anspruch 1 oder 2, **dadurch gekennzeichnet, dass** die Deckschalen (3) die Kunststoffrahmenprofilteile (2) formschlüssig umgreifen.

4. Kunststofffenster- oder türrahmen (1) nach Anspruch 1 oder 2, **dadurch gekennzeichnet, dass** die Deckschalen (3) auf die Kunststoffrahmenprofilteile (2) aufgeklebt, aufgeklipst oder aufgeschraubt sind.

5. Kunststofffenster- oder türrahmen (1) nach einem der vorhergehenden Ansprüche, **dadurch gekennzeichnet, dass** die Deckschale (3) aus Metall, insbesondere Aluminium gefertigt ist.

6. Kunststofffenster- oder türrahmen (1) nach einem der vorhergehenden Ansprüche 1 bis 3, **dadurch gekennzeichnet, dass** die Deckschale (3) aus Kunststoff oder Holz gefertigt ist.

7. Kunststofffenster- oder türrahmen (1) nach einem der vorhergehenden Ansprüche, **dadurch gekennzeichnet, dass** die Deckschalen (3) zumindest auf ihrer Sichtseite mit einer Folierung versehen sind.

8. Verfahren zur Herstellung eines Kunststofffenster- oder türrahmens (1) nach einem der vorhergehenden Ansprüche, mit den Verfahrensschritten:
a) Zuschneiden der Kunststoffrahmenprofilteile (2) auf Gehrung,
b) Zuschneiden der Deckschalen (3) auf Gehrung, wobei die Länge der jeweiligen Deckschalen (3) um ein vordefiniertes Abbrandmaß (d) geringer ist als die Länge des jeweiligen Kunststoffrahmenprofilteils (2),
c) Zusammenführen der Kunststoffrahmenprofilteile (2) mit den Deckschalen (3),
d) Verschweißen der Kunststoffrahmenprofilteil (2) - Deckschale (3) - Verbünde zu einem Rahmen.

9. Verfahren nach Anspruch 8, **dadurch gekennzeichnet, dass** in Verfahrensschritt c) die Deckschalen (3) auf die Kunststoffrahmenprofile (2) aufgeschoben werden.

10. Verfahren nach Anspruch 8 oder 9, **dadurch gekennzeichnet, dass** in Verfahrensschritt d) zunächst die einander zugewandten Randbereiche (22) der Kunststoffrahmenprofilteile (2) erhitzt werden und anschließend die Kunststoffrahmenprofilteile (2) aneinander gepresst werden, bis die Deckschalen (3) einander berühren.
